# EUROPEAN PATENT SPECIFICATION

(11) **EP 3 497 136 B1**
(45) Date of publication and mention of the grant of the patent: **16.12.2020**
(21) Application number: 17735576.5
(22) Date of filing: 10.07.2017
(51) Int. Cl.: C08F 2/18, C08F 2/22, C08F 6/22, C08L 9/00, C08L 25/06, C08L 33/20

(54) **PROCESS FOR THE PRODUCTION OF POLYMERS VIA EMULSION POLYMERISATION**
VERFAHREN ZUR HERSTELLUNG VON POLYMEREN DURCH EMULSIONSPOLYMERISIERUNG
PROCÉDÉ POUR LA PRODUCTION DE POLYMÈRES PAR POLYMÉRISATION EN EMULSION

(30) Priority: 12.08.2016 EP 16183911
(43) Date of publication of application: 19.06.2019
(73) Proprietor: SABIC Global Technologies B.V., 4612 PX Bergen op Zoom (NL)
(72) Inventor: WANG, Shi, 6160 GA Geleen (NL); XU, Jianhua, 6160 GA GELEEN (NL); LOWRY, Vern, 6160 GA GELEEN (NL)
(74) Representative: Sabic Intellectual Property Group
(86) International application number: PCT/EP2017/067240
(87) International publication number: WO 2018/028907

(56) References cited:
- EP-A1- 3 020 751
- EP-A2- 0 187 715
- WO-A1-2009/082640

## Description

The present invention relates to a process for the production of polymers via emulsion polymerisation wherein the polymers have reduced discoloration.

Emulsion polymerisation is a well-reputed process for the production of a variety of polymers, including for example acrylonitrile-butadiene styrene (ABS), styrene-butadiene styrene (SBS), methyl methacrylate-butadiene styrene (MBS), acrylonitrile styrene acrylate (ASA), polytetrafluoroethylene-styrene-acrylonitrile (TSAN) and styrene acrylonitrile (SAN). In such emulsion polymerisation processes, a reaction mixture, and optionally additives for initiation and control of the reaction and emulsifying agent(s) may be combined with a liquid medium, thereby forming an emulsion, which is subjected to conditions for polymerisation. During the polymerisation, a polymeric latex is formed. Such polymeric latex may be understood in the context of the present invention to be a colloidal distribution of polymeric particles in the liquid medium. The liquid medium may for example be water, thereby forming an aqueous dispersion of the polymeric particles.

In order to obtain the desired polymer as product from the process, the polymeric particles that are present in the polymeric latex need to be isolated. In the process according to the present invention, this is achieved by a coagulation step. In the coagulation step, the polymeric latex is subjected to certain conditions, optionally including addition of one or more coagulation agents, as a result of which the polymer is isolated from the medium, thereby obtaining the desired polymer. This isolation may comprise dewatering and drying. However, there may be a need for storage of the polymeric latex obtained from the polymerisation prior to subjecting it to coagulation, for example as a result of the capacity of the coagulation unit in which the coagulation step is performed. During this storage, organisms such as bacteria may develop in the polymeric latex. Such organisms can negatively affect the viscosity, pH, stability, odor, and colour of the polymeric latex. Such unfavorable properties of the polymeric latex may lead to unfavourable properties of the polymer obtained from the process. In particular, it may lead to an undesirable colour of the polymer that is obtained from the process.

Thus, there remains a need for an emulsion process allowing for the production of polymers having a reduced discoloration.

This has now been achieved according to the present invention by a process for the production of a polymer comprising the steps of:
a) polymerisation of an emulsion comprising a reaction mixture to obtain a polymeric latex; and
b) coagulating the polymeric latex by exposing the polymeric latex to one or more coagulant, and isolating the coagulated product to obtain a polymer;
wherein the polymeric latex obtained under a) is stored prior to coagulation step b) for at most such a time that the polymeric latex contains ≤ 500 CFU/ml of pigment-producing organisms as determined in accordance with ASTM D 5465-93 (2012) when subjecting the polymeric latex to coagulation step b) ; wherein the latex is subjected to the storage for a period of ≤ 20h.

Such process allows for the production of a polymer having a reduced discoloration. The polymers may have a desirable appearance such as an opaque, white appearance.

The presence of such pigment-producing organisms in the polymeric latex that is subjected to coagulation in higher quantities leads to undesired discoloration. It is required that the colour of the polymer obtained from the process according to the present invention has a suitable white opaque colour. For example, the polymer may have a colour as defined by the yellowness index of ≤ 30.0, wherein the yellowness index is determined in accordance with ASTM E313 (2010). Further, the polymer may have a CIE a* value as determined in accordance with ASTM E313 (2010) of ≤ -1.5. In the context of the present invention, a polymeric latex may be understood to be an aqueous system comprising polymeric particles in dispersion. For example, a polymeric latex may comprise 20.0 - 60.0 wt% of polymeric particles with regard to the total weight of the polymeric latex. Preferably, the polymeric latex comprises 25.0 - 55.0 wt% of polymeric particles with regard to the total weight of the polymeric latex. More preferably, the polymeric latex comprises 30.0 - 50.0 wt% of polymeric particles with regard to the total weight of the polymeric latex.

The polymerisation may be performed in one or more polymerisation vessels. Such polymerisation vessel may for example be a closed reactor. The vessel may for example have a volume ranging from 1 I to 75000 I. It may be understood that other vessels and/or vessels having a different volume may also be used for the polymerisation and can be scaled for industrial production of a desired polymer. The vessel can for example have a volume of 3.5 I. The volume of the vessel can refer to the internal volume of the vessel available for occupation by the liquid and vapour containing the applicable reagents. In an example, an initial liquid batch can be introduced into the vessel in an amount sufficient to occupy 40 to 80 % of the volume of the vessel.

In such polymerisation vessel, an system comprising a medium such as water, a reaction mixture and optionally one or more emulsifying agent(s), may be introduced prior to the onset of the polymerisation reaction. Additionally, additives for initiation and control of the reaction, including for example a free radical initiator, may be introduced.

The reaction mixture comprises one or more reactant(s). The reaction mixture may comprise a rubber latex prepared in a previous emulsion reaction. Such rubber latex may be an aqueous dispersion of rubber particles. Such rubber particles may for example be polybutadiene rubber particles. Alternatively, such rubber particles may be acrylate rubber particles. Such rubber particles may for example has an average particle size of 60-500 nm. Preferably, the rubber particles have an average particle size of 150 - 500 nm. The average particle size may for example be determined according to ASTM D1417 (2010). Rubber particles having such average particle size may be obtained directly from the emulsion reaction, alternatively such rubber particles may be formed by subjecting the rubber latex obtained from the emulsion reaction to a subsequent treatment, such as a chemical or physical agglomeration treatment, to obtain a rubber latex comprising rubber particles having such average particle size.

Such rubber latex may for example comprise 20.0 - 50.0 wt% of rubber particles. More preferably, the rubber latex comprises 25.0 - 45.0 wt% of rubber particles, with regard to the total weight of the rubber latex.

Such rubber latex may be combined with reactants and optionally further ingredients such as additives for initiation and control of the reaction and emulsifying agent(s), as well as optionally a further quantity of the medium to form the reaction mixture.

During the course of the polymerisation, further reactants may be provided to the polymerisation vessel. Further, during the course of the polymerisation, a further quantity of a free-radical initiator may be provided to the polymerisation vessel.

The polymerisation may be operated in a continuous manner or in a batch-wise manner. In a particular embodiment, the polymerisation is operated in a batch-wise manner.

The polymerisation preferably is performed at a pressure of 0 - 15.0 bar, alternatively 2.0 - 15.0 bar, alternatively 2.0 - 10.0 bar, alternatively 2.0 - 5.0 bar or 2.5 - 5.0 bar.

The polymerisation may for example be performed at a temperature in the range of 35.0 - 95.0 °C, alternatively 50.0 - 85.0°C. Preferably, the polymerisation is performed at a temperature in the range of 55.0 - 80.0°C.

The polymerisation preferably has a duration of 1.5 - 9.0 h.

It is particularly preferred that the polymerisation is performed at a pressure of 0 - 15.0 bar, at a temperature in the range of 50.0 - 85.0°C. More particularly, the polymerisation is performed at a pressure of 2.0 - 15.0 bar, at a temperature in the range of 50.0 - 85.0°C. Even more particularly, the polymerisation may be performed at a pressure of 2.0 - 5.0 bar, at a temperature in the range of 55.0 - 80.0°C.

It is further particularly preferred that the polymerisation is performed at a pressure of 2.0 - 15.0 bar, at a temperature in the range of 50.0 - 85.0°C, for a duration of 1.5 - 9.0 h. More particularly, the polymerisation may be performed at a pressure of 2.0 - 5.0 bar, at a temperature in the range of 55.0 - 80.0°C, for a duration of 1.5 - 9.0 h.

Near the end of the polymerisation, a quantity of a further reactant may be introduced to the polymerisation vessel, wherein the further reactant serves to react with the unreacted reactants present in the polymerisation vessel, in order to terminate the polymerisation. Such further reactant may for example be selected from methyl acrylate, ethyl acrylate, butyl acrylate, 2-ethylhexyl acrylate, cyclohexyl acrylate, benzyl acrylate, isopropyl acrylate, methyl methacrylate, ethyl methacrylate, butyl methacrylate, isopropyl methacrylate, cyclohexyl methacrylate, vinyl acetate, dimethyl maleate, diethyl maleate, or combinations thereof. Particularly, the further reactant may be selected from methyl acrylate or methyl methacrylate.

Such further reactant may for example be added in a quantity of ≤ 5.0 wt%, alternatively ≤ 2.0 wt%, alternatively ≤ 1.0 wt%, with regard to the total weight of the reaction mixture. Preferably, the further reactant is added in a quantity of ≥ 0.5 and ≤ 5.0 wt%, alternatively ≥ 0.5 and ≤ 2.0 wt%, alternatively ≥ 0.5 and ≤ 1.0 wt%, with regard to the total weight of the reaction mixture

It is particularly preferred that the polymerisation step comprises the addition of ≤ 5.0 wt% with regard to the total weight of the reaction mixture of a further reactant selected from methyl acrylate or methyl methacrylate. It is even more preferred that the polymerisation step comprises the addition of ≤ 4.0 or ≤ 2.0 wt% with regard to the total weight of the reaction mixture of a further reactant selected from methyl acrylate or methyl methacrylate when the polymerisation reaches 95% conversion. Alternatively, the polymerisation step may comprise the addition of ≥ 0.5 and ≤ 5.0 wt% with regard to the total weight of the reaction mixture of a further reactant selected from methyl acrylate or methyl methacrylate. More preferably, the polymerisation step comprises the addition of ≥ 0.5 and ≤ 4.0 wt% or ≥ 0.5 and ≤ 4.0 wt% with regard to the total weight of the reaction mixture of a further reactant selected from methyl acrylate or methyl methacrylate when the polymerisation reaches 95% conversion.

The reactant(s) that are comprised in the reaction mixture may for example be selected from vinyl aromatic compounds, compounds comprising at least 2 unsaturated carbon-carbon bonds, polymers obtained from compounds comprising at least 2 unsaturated carbon-carbon bonds, vinyl cyanide compounds, compounds comprising one or more acrylate moieties, polymers obtained from compounds comprising one or more acrylate moieties, or combinations thereof.

Suitable vinyl aromatic compounds include for example styrene, α-methyl styrene, halostyrenes such as dibromostyrene, vinyltoluene, vinylxylene, butylstyrene, p-hydroxystyrene, methoxystyrene, or combinations thereof. Particularly suitable vinyl aromatic compounds are for example styrene and α-methyl styrene. It is preferred that the vinyl aromatic compound is styrene.

Suitable vinyl cyanide compounds include for example acrylonitrile, methacrylonitrile, ethacrylonitrile, α-chloroacrylonitrile, α-bromoacrylonitrile, or combinations thereof. It is preferred that the vinyl cyanide compound is acrylonitrile.

Suitable compounds comprising at least 2 unsaturated carbon-carbon bonds include for example butadiene, isoprene, chloroprene, 2-methyl-1,3-butadiene, 2,3-dimethyl-1,3-butadiene, 1,2-propadiene, 1,4-pentadiene, 1,2-pentadiene, 1,5-hexadiene, or combinations thereof. It is preferred that the compound comprising at least 2 unsaturated carbon-carbon bonds is butadiene.

Suitable polymers obtained from compounds comprising at least 2 unsaturated carbon-carbon bonds include for example polybutadiene, polyisoprene, poly(styrene-butadiene), poly(acrylonitrile-styrene), poly(styrene-isoprene), poly(isoprene-butadiene), or combinations thereof. It is preferred that the polymer obtained from compounds comprising at least 2 unsaturated carbon-carbon bonds is polybutadiene.

Suitable compounds comprising one or more acrylate moieties include for example methyl acrylate, ethyl acrylate, butyl acrylate, 2-ethylhexyl acrylate, cyclohexyl acrylate, benzyl acrylate, isopropyl acrylate, methyl methacrylate, ethyl methacrylate, butyl methacrylate, isopropyl methacrylate, cyclohexyl methacrylate, or combinations thereof. Particularly, the compound comprising one or more acrylate moieties may be selected from methyl acrylate or methyl methacrylate.

Suitable polymers obtained from compounds comprising one or more acrylate moieties include for example ethylene acrylic elastomers and poly(n-butyl acrylate).

It is preferred that the reactants that are comprised in the reaction mixture are selected from styrene, acrylonitrile, butadiene, polybutadiene, poly(n-butyl acrylate), butyl(meth)acrylate, methyl(meth)acrylate, or combinations thereof. It is particularly preferred that the reactants that are comprised in the reaction mixture include styrene and acrylonitrile. It is further preferred that the reaction mixture comprises polybutadiene. In another particularly preferred embodiment, the reactants that are comprised in the reaction mixture include styrene, polybutadiene and acrylonitrile. Alternatively, the reactants that are comprised in the reaction mixture may include methyl methacrylate, polybutadiene and styrene.

The reaction mixture may for example comprise acrylonitrile and styrene, wherein the molar ratio of styrene to acrylonitrile in the reaction mixture is in the range of 1.5 - 4.0.

The reaction mixture may for example comprise acrylonitrile, polybutadiene and styrene, wherein the molar ratio of styrene to acrylonitrile is in the range of 1.5 - 4.0, and wherein the molar ratio of polybutadiene to the sum of styrene and acrylonitrile is in the range of 0.1 - 3.0. It is preferred that reaction mixture comprises acrylonitrile, polybutadiene and styrene, wherein the molar ratio of styrene to acrylonitrile is in the range of 2.0 - 3.0, and wherein the molar ratio of polybutadiene to the sum of styrene and acrylonitrile is in the range of 0.2 - 1.0.

A particular embodiment of the invention also relates to a process wherein the reaction mixture comprises acrylonitrile, styrene and poly(n-butyl acrylate).

During the polymerisation step, a further quantity of reactants may be added to the polymerisation vessel. The composition of this further quantity of reactants may be the same or different from the reactants present in the aqueous system prior to the onset of the polymerisation step. For example, the composition of the further quantity of reactants is the same as of the reactants present in the aqueous system prior to the onset of the polymerisation step.

The additives for initiation and control of the reaction may for example include free radical initiators. Suitable free radical initiators include:
- persulfate compounds such as ammonium persulfate, potassium persulfate and sodium persulfate;
- peroxides such as hydrogen peroxide, cumene hydroperoxide, t-butyl hydoperoxide, acetylperoxide, lauroyl peroxide, peracetic acid and perbenzoic acid; and
- azo-compounds such as 2,2'-azobisisobutyronitrile and 4,4'-azobis(4-cyanovaleric acid).

The free radical initiators may for example be used in quantities of 0.01 -2.00 wt% with regard to the total weight of the reaction mixture, preferably 0.1 - 1.5 wt%, more preferably 0.1 - 0.5 wt%.

The free radical initiators may be provided to the polymerisation at the onset, gradually during the polymerisation reaction, or in one quantity at the onset and a further quantity with the addition of the further reactant.

The emulsion may for example be an aqueous emulsion. The emulsion may for example comprise one of more emulsifying agent(s). The emulsifying agent(s) that may be used in the polymerisation step may for example be selected from:
- anionic emulsifiers including higher fatty alcohol sulphates, higher alkyl sulphonates, alkylaryl sulphonates, aryl sulphonates, the condensation products thereof with formaldehyde, salts of sulphosuccinic acid esters, and suphated ethylene oxide adducts; and
- non-ionic emulsifiers including the reaction products of ethylene oxide, 2-ethyloxirane or methyloxirane with
   - C₁₀-C₂₀ alkyl alcohol(s);
   - C₁₀-C₂₀ alkyl acid(s); or
   - C₁₀-C₂₀ alkyl amide(s).

Such C₁₀-C₂₀ alkyl alcohol(s) may for example be one of more selected from 1-decanol, 1-dodecanol, 1-tetradecanol, 1-hexadecanol, 1-octadecanol or 1-eicosanol.

Such C₁₀-C₂₀ alkyl acid(s) may for example be one or more selected from decanoic acid, dodecanoic acid, tetradecanoic acid, hexadecanoic acid, octadecanoic acid or eicosanoic acid.

Such C₁₀-C₂₀ alkyl amide(s) may for example be one or more selected from decanamide, dodecanamide, tetradecanamide, hexadecanamide, octadecanamide or eicosanamide.

The emulsifying agent(s) may for example be used in quantities of 0.1 wt% - 10.0 wt% with regard to the total weight of the reaction mixture. Preferably, the emulsifying agent(s) may be used in quantities of 0.2 wt% - 8.0 wt% with regard to the total weight of the reaction mixture.

In some aspects, a chain transfer agent may be added to the polymerisation step. Appropriate chain transfer agents may include for example organic sulfur compounds such as C1-C15 alkyl mercaptans, n-, i- or t-dodecyl mercaptan. The chain transfer agent may be added in quantities of 0.1 - 3.0 wt% with regard to the total weight of the reactants, more preferably 0.1 - 2.0 wt%.

The polymeric latex may for example have a pH of ≥ 9.0.

The polymeric latex may during storage preferably be subjected to a temperature of ≤ 45°C, more preferably ≤ 40°C, even more preferably ≤ 35°C. It is particularly preferred that the polymeric latex is during storage subjected to a temperature of ≥ 5°C and ≤ 35°C.

Storage may be understood to be the period between the completion of the polymerisation process and the coagulation of the polymeric latex. A period of storage may be needed when a quantity of polymeric latex is obtained from a polymerisation vessel but the coagulation unit is not yet available to process that quantity of polymeric latex. In certain embodiments of the invention, the process involves one or multiple polymerisation vessels, which may be operated continuously, thereby continuously providing a polymeric latex stream, or alternatively, the polymerisation may be operated in batch, wherein a batch of polymeric latex is obtained upon completion of the polymerisation in a polymerisation vessel used for such batch polymerisation. For example, the process may involve multiple polymerisation vessels operating in batch, where each of these polymerisation vessels may produce a batch of polymeric latex, where the coagulation of the polymeric latices originating from such multiple batch polymerisation vessels may be done in a single coagulation unit. Alternatively, the coagulation of the polymeric latices originating from such multiple batch polymerisation vessels may be done in multiple coagulation units. A certain embodiment also relates to a process comprising a single polymerisation vessel operated in batch providing a polymeric latex that is subjected to coagulation in a single coagulation unit. Preferably, the coagulation is performed in a continuous process.
The polymeric latex is subjected to storage for a period of ≤ 20 h, even more preferable ≤ 15 h.
The storage may be performed in a storage vessel.
In certain circumstances, it may be desired to store the polymeric latex for a certain period, where for example the equipment that is used for the coagulation step is not available at the time where a quantity of polymeric latex is available from the polymerisation vessel. For example, the polymeric latex may be stored ≥ 1 h, or ≥ 2 h, or ≥ 5 h. For example, the polymeric latex may be stored for ≥ 1 h and ≤ 20 h, more preferably ≥ 5 h and ≤ 15 h. Such storage time may allow for production of a polymer having desired low discoloration, whilst still allowing for a certain storage step in the process that contributes to process flexibility and improved process economics.

The coagulation may be performed in a coagulation unit. It is preferred that a coagulant is added to the polymeric latex. Such coagulant is understood to contribute to the destabilization of the aqueous dispersion of the polymeric particles in the polymeric latex. The coagulant may for example be an acid, such as one selected from acetic acid, sulfuric acid, nitric acid, phosphoric acid, or combinations thereof. Alternatively, the coagulant may be selected compounds having a monovalent cation and a monovalent anion, or combinations of such compounds. For example, the coagulant may be selected from sodium chloride, sodium sulfate, calcium chloride, ammonium acetate, magnesium sulfate, or combinations thereof. The coagulant may for example be added to the polymeric latex in such quantity as to ensure a pH of the polymeric latex of ≤ 5.0. As a result of the coagulation process, polymeric particles agglomerate and settle at the top or at the bottom of the coagulation unit. The polymeric particles may subsequently be separated from the aqueous phase. Such separation may be performed by filtration or centrifugation.

The coagulation unit may for example be a vessel. The temperature of the content of the vessel during coagulation may for example be 50.0 - 95.0 °C.

The polymeric particles may upon separation be subjected to washing with water and/or drying.

In the process according to the invention, it is required that the polymeric latex obtained from the polymerisation step is stored for at most such a time that the polymeric latex contains ≤ 500 CFU/ml of pigment-producing organisms as determined in accordance with ASTM D 5465-93 (2012) when subjecting the polymeric latex to the coagulation step. It is more preferred that the polymeric latex contains ≤ 300 CFU/ml of pigment-producing organisms, even more preferred ≤ 100 CFU/ml.

The pigment-producing organisms may for example be pigment-producing bacteria. Preferably, such pigment-producing bacteria may be aquatic pigment-producing bacteria.

It is particularly preferred that the polymeric latex contains ≤ 500 CFU/ml of pigment-producing organisms where the pigment-producing organisms produce compounds selected from tetrapyrroles, carotenoids, flavonoids, quinines, indigoids, indole derivatives, metalloproteins or combinations thereof. More particularly, it is preferred that the polymeric latex contains ≤ 500 CFU/ml of pigment-producing organisms where the pigment-producing organisms produce compounds selected from chlorophylls, carotenes, xanthophylls, anthocyanins, flavonols, naphthaquinones, anthraquinones, betalaines, eumelains, astaxantines, zeaxanthines, lycopenes, riboflavines, or combinations thereof.

For example, such pigment-producing organisms may be bacteria selected from the genera Bacillus, Microcossus, Serratia, Flavobacterium or Pseudomonas. In a particular example, the pigment-producing organisms may be bacteria selected from the species Bacillus Lentus, Bacillus Subtilis, Serratia Marcescens or Pseudomonas Pseudoalcaligenes.

The polymeric latex obtained from polymerisation is stored prior to the coagulation step for at most such a time that the polymeric latex contains ≤ 500 CFU/ml of pigment-producing organisms as determined in accordance with ASTM D 5465-93 (2012) when subjecting the polymeric latex to coagulation step. Preferably, the polymeric latex contains ≤ 400 CFU/ml of pigment-producing organisms as determined in accordance with ASTM D 5465-93 (2012), more preferably ≤ 250 CFU/ml. It is particularly preferred that the polymeric latex contains ≤ 500 CFU/ml of pigment-producing organisms where the pigment-producing organisms are bacteria selected from the genera Bacillus, Microcossus, Serratia, Flavobacterium or Pseudomonas when subjecting the polymeric latex to coagulation step. Even more preferred is that that the polymeric latex contains ≤ 250 CFU/ml of pigment-producing organisms where the pigment-producing organisms are bacteria selected from the genera Bacillus, Microcossus, Serratia, Flavobacterium or Pseudomonas when subjecting the polymeric latex to coagulation step. Particularly preferred in an embodiment of the invention in which the polymeric latex contains ≤ 250 CFU/ml of pigment-producing organisms where the pigment-producing organisms are bacteria selected from the species Bacillus Lentus, Bacillus Subtilis, Serratia Marcescens or Pseudomonas Pseudoalcaligenes. Such embodiments allow for the production of a polymer having a particularly good colour appearance.

The storage may for example take place in a storage tank, wherein the storage tank is cleaned prior to the introduction of the polymeric latex with a solution comprising 0.05 - 3 ppm chlorine.

Furthermore, the polymeric latex may be exposed to ultraviolet radiation for at least a fraction of the time between the production of the latex and the coagulation. Preferably, the polymeric latex is exposed to ultraviolet radiation during all of the time between the production of the latex and the coagulation. Furthermore, other raw materials, for example water, and other process stream such as vents used between the production of the polymeric latex and the coagulation step may also be exposed to ultraviolet radiation for at least a fraction of the time. The ultraviolet radiation may for example be ultraviolet radiation in the 260-300 nm wavelength range, preferable 260-270 nm. Use of such ultraviolet radiation is understood to be detrimental to the growth of pigment-producing organisms but does not affect the polymer.

Further, a quantity of an antimicrobial agent may be added to the polymeric latex obtained in step a) prior to storage. The antimicrobial agent may for example be selected from 1,2-benzisothiazolin-3-one, N-methyl-1,2-benzisothiazol-3(2H)one, 2-methyl-4-isothiazolin-3-one or combinations thereof. The antimicrobial agent may be added to the polymeric latex in a quantity of 200 - 2000 ppm with regard to the total weight of the polymeric latex. Preferably, the antimicrobial agent is selected from 1,2-benzisothiazolin-3-one, N-methyl-1,2-benzisothiazol-3(2H)one, 2-methyl-4-isothiazolin-3-one or combinations thereof, and is added to the polymeric latex in a quantity of 200 - 2000 ppm with regard to the total weight of the polymeric latex

The isolation of the coagulated product may be done using conventional means for separating solid/liquid systems. For example, the isolation of the coagulated product may be done by dewatering and subsequent drying.

The present invention will now be illustrated by the following non-limiting examples.

In a 3I reaction vessel, an aqueous emulsified system comprising a fatty acid soap as emulsifier, prepared using demineralized water, was provided comprising 61 parts by weight of polybutadiene. The contents of the vessel were heated to 57°C. A first feed stream comprising 9 parts by weight of acrylonitrile, a second feed stream comprising 27 parts by weight of styrene, and a third feed stream comprising 0.45 parts by weight of cumene hydroperoxide as initiator were gradually added to the aqueous emulsified system over a period of 60 min. A fourth feed stream comprising 3 parts by weight of methyl methacrylate was added to the reaction vessel over a period of 5 min. A polymeric latex comprising ABS polymeric particles was obtained. The polymeric latex comprised 40.0 wt% of polymeric particles. The polymeric latex was cooled to 40°C.

The polymeric latex was transferred to a storage vessel and maintained in the storage vessel under the conditions as indicated in table I.

**Table I: storage conditions. In sample 1, the storage tank had been cleaned with chlorinated water, in samples 2-4 the storage tank had been cleaned with demineralised water.**

| Sample | 1 | 2 | 3 (C) | 4 (C) |
|---|---|---|---|---|
| Temperature (°C) | 40 | 40 | 40 | 40 |
| Time (h) | 15 | 15 | PCT | 48 |
| Storage system cleaning | Chlorinated water | Water | Water | Water |

Following the storage as described above, samples of the stored polymeric latices 1-4 were taken and subjected to microbial incubation for 4 days at 27°C using a microbial testing kit (SANI Check B bacteria test kit, Biosan Lab). For each latex sample, a sampling paddle was immersed in the latex for 2-3 sec, then drained from excess fluid, and placed in a testing vial. The pigmented bacteria count was determined using the counting method of ASTM D5465-93. The results are presented in table II.

**Table II: quantity of pigmented bacteria in sample**

| Sample | 1 | 2 | 3 (C) | 4 (C) |
|---|---|---|---|---|
| CFUₚ/ml | 100 | 100 | 1000 | 10000 |

Wherein CFUₚ/ml is the quantity of colony forming units of pigmented bacteria per ml of sample.

The polymeric latices obtained after storage as indicated above were subjected to an acid coagulation treatment Of each sample of latex obtained after storage treatment, a sample of polymer was obtained accordingly.

In order to emulate the duration of the coagulation process as it takes place in large-scale production, where the coagulation itself takes a certain time, coagulation of the polymeric latices of each sample were performed for a portion of each latex sample at a time immediately after termination of the storage period (t₀), and at 3 h, 6 h and 9 h after the termination of the storage period (t₃, t₆, and t₉).

The polymer samples obtained from the above described coagulation were subjected to colour determination using a spectrophotometric colorimeter on a moulded polymer disk. The colorimetric coordinate a* was obtained. The yellowness index YI was determined according to ASTM E313 (2010). The obtained results are presented in table III.

For each polymer sample coagulated at t₀, the a* and YI are presented. For each polymer sample coagulated at t₃, t₆ and t₉, the difference for a* and YI compared to the previous measurement are presented.

| Sample | 1 | 2 | 3 (C) | 4 (C) |
|---|---|---|---|---|
| a* | -2.5 | -1.8 | -1.2 | -0.4 |
| a*₃₋₀ | 0.0 | -0.2 | 0.4 | 0.0 |
| a*₆₋₃ | 0.0 | -0.2 | 0.1 | 0.5 |
| a*₉₋₆ | 0.0 | 0.0 | 0.2 | 0.4 |
| YI | 27.4 | 28.4 | 30.3 | 32.1 |
| YI₃₋₀ | 0.0 | -0.1 | 0.1 | |
| YI₆₋₃ | 0.1 | 0.0 | 0.4 | |
| YI₉₋₆ | 0.0 | 0.0 | 0.2 | |

The colour coordinate value a* and the YI are dimensionless.

Wherein:
a*₃₋₀ is the difference between the a* colour coordinate determined on a sample of polymer coagulated at t₃ and the a* colour coordinate determined on a sample of polymer coagulated at t₀.
a*₆₋₃ is the difference between the a* colour coordinate determined on a sample of polymer coagulated at t₆ and the a* colour coordinate determined on a sample of polymer coagulated at t₃.
a*₉₋₆ is the difference between the a* colour coordinate determined on a sample of polymer coagulated at tg and the a* colour coordinate determined on a sample of polymer coagulated at t₆.
YI₃₋₀ is the difference between the yellowness index determined on a sample of polymer coagulated at t₃ and the yellowness index determined on a sample of polymer coagulated at t₀.
YI₆₋₃ is the difference between the yellowness index determined on a sample of polymer coagulated at t₆ and the yellowness index determined on a sample of polymer coagulated at t₃.
YI₉₋₆ is the difference between the yellowness index determined on a sample of polymer coagulated at t₉ and the yellowness index determined on a sample of polymer coagulated at t₆.

The above results clearly indicate that the samples having a low pigmented bacteria content, such as below 500 CFU/ml, show both a better yellowness index and a far less change of colour as represented by YI and a* as a dependent of the time to coagulation.

## Claims

1. Process for the production of a polymer comprising the steps of:
a) polymerisation of an emulsion or suspension comprising a reaction mixture to obtain a polymeric latex; and
b) coagulating the polymeric latex by exposing the polymeric latex to one or more coagulant, and isolating the coagulated product to obtain a polymer;
wherein the polymeric latex obtained under a) is stored prior to coagulation step b) for at most such a time that the polymeric latex contains ≤ 500 CFU/ml of pigment-producing organisms as determined in accordance with ASTM D 5465-93 (2012) when subjecting the polymeric latex to coagulation step b); wherein the latex is subjected to the storage for a period of ≤ 20h.

2. Process according to claim 1 wherein the reaction mixture comprises one or more reactants selected from styrene, acrylonitrile, butadiene, polybutadiene, butyl(meth)acrylate, poly(butyl acrylate), methyl(meth)acrylate, or combinations thereof.

3. Process according to any one of claims 1-2, where the pigment-producing organisms are bacteria selected from the genera Bacillus, Microcossus, Serratia,. Flavobacterium or Pseudomonas.

4. Process according to claim 1-3, where the pigment-producing organisms are bacteria selected from the species Bacillus Lentus, Bacillus Subtilis Serratia Marcencens, or Pseudomonas Pseudoalcaligenes.

5. Process according to any one of claims 1-4, wherein the emulsion is an aqueous emulsion.

6. Process according to any one of claims 1-5, wherein the emulsion comprises a quantity of emulsifying agent selected from:
• anionic emulsifiers including higher fatty alcohol sulphates, higher alkyl sulphonates, alkylaryl sulphonates, aryl sulphonates, the condensation products thereof with formaldehyde, salts of sulphosuccinic acid esters, and suphated ethylene oxide adducts; and
• non-ionic emulsifiers including the reaction products of ethylene oxide, 2-ethyloxirane or methyloxirane with
• C₁₀-C₂₀ alkyl alcohol(s);
• C₁₀-C₂₀ alkyl acid(s); or
• C₁₀-C₂₀ alkyl amide(s);
• or a combination thereof.

7. Process according to claim 6 wherein:
• the C₁₀-C₂₀ alkyl alcohol(s) are selected from 1-decanol, 1-dodecanol, 1-tetradecanol, 1-hexadecanol, 1-octadecanol or 1-eicosanol;
• the C₁₀-C₂₀ alkyl acid(s) are selected from decanoic acid, dodecanoic acid, tetradecanoic acid, hexadecanoic acid, octadecanoic acid or eicosanoic acid; and/or
• the C₁₀-C₂₀ alkyl amide(s) are selected from decanamide, dodecanamide, tetradecanamide, hexadecanamide, octadecanamide or eicosanamide.

8. Process according to any one of claims 6-7 wherein the emulsifying agent is used in quantities of 0.1 wt% - 10.0 wt% with regard to the total weight of the reaction mixture.

9. Process according to any one of claims 1-8, wherein the reaction mixture further comprises a free radical initiator selected from:
• persulfate compounds including ammonium persulfate, potassium persulfate and sodium persulfate;
• peroxides including hydrogen peroxide, cumene hydroperoxide, t-butyl hydoperoxide, acetylperoxide, lauroyl peroxide, peracetic acid and perbenzoic acid;
• azo-compounds such as 2,2'-azobisisobutyronitrile and 4,4'-azobis(4-cyanovaleric acid);
• or combinations thereof.

10. Process according to claim 9 wherein the free radical initiator is used in quantities of 0.01 - 2.00 wt% with regard to the total weight of the reaction mixture.

11. Process according to any one of claim 1-10, wherein the storage takes place in a storage tank, wherein the storage tank is cleaned prior to the introduction of the polymeric latex with a solution comprising 0.05 - 3 ppm chlorine.

12. Process according to any one of claims 1-11, wherein the polymeric latex is exposed to ultraviolet radiation for at least a fraction of the time between the production of the latex and the coagulation.

13. Process according to any one of claims 1-12, wherein a quantity of an antimicrobial agent is added to the polymeric latex obtained in step a) prior to storage.

14. Process according to claim 13, wherein the antimicrobial agent is selected from 1,2-benzisothiazolin-3-one, N-methyl-1,2-benzisothiazol-3(2H)one, 2-methyl-4-isothiazolin-3-one or combinations thereof, and wherein the antimicrobial agent is added to the polymeric latex in a quantity of 200 - 2000 ppm with regard to the total weight of the polymeric latex.

15. Process according to any one of claims 1-14, wherein the reaction mixture comprises acrylonitrile and styrene, and/or wherein the reaction mixture comprises polybutadiene.

## Patentansprüche

1. Verfahren für die Herstellung eines Polymers, umfassend die Schritte:
a) Polymerisation einer Emulsion oder Suspension, die ein Reaktionsgemisch umfasst, um einen Polymerlatex zu erhalten; und
b) Koagulieren des Polymerlatex, indem der Polymerlatex einem oder mehreren Koagulierungsmitteln ausgesetzt wird, und Isolieren des koagulierten Produkts, um ein Polymer zu erhalten;
wobei der unter a) erhaltene Polymerlatex vor dem Koagulationsschritt b) höchstens so lange gelagert wird, dass der Polymerlatex enthält ≤500 KBE/ml pigmentproduzierenden Organismen, bestimmt nach ASTM D 5465-93 (2012) enthält, wenn der Polymerlatex dem Koagulationsschritt b) unterzogen wird; wobei der Latex der Lagerung für einen Zeitraum von ≤20 h unterzogen wird.

2. Verfahren nach Anspruch 1, wobei das Reaktionsgemisch einen oder mehrere Reaktanten umfasst, die aus Styrol, Acrylnitril, Butadien, Polybutadien, Butyl(meth)acrylat, Poly(butylacrylat), Methyl(meth)acrylat oder Kombinationen davon ausgewählt sind.

3. Verfahren nach einem der Ansprüche 1-2, wobei die pigmentproduzierenden Organismen Bakterien sind, die aus den Gattungen Bacillus, Microcossus, Serratia, Flavobacterium oder Pseudomonas ausgewählt sind.

4. Verfahren nach Anspruch 1-3, wobei die pigmentproduzierenden Organismen Bakterien sind, die aus den Arten Bacillus Lentus, Bacillus Subtilis Serratia Marcencens, oder Pseudomonas Pseudoalcalcaligenes ausgewählt sind.

5. Verfahren nach einem der Ansprüche 1-4, wobei die Emulsion eine wässrige Emulsion ist.

6. Verfahren nach einem der Ansprüche 1-5, wobei die Emulsion eine Menge von Emulgator umfasst, ausgewählt aus:
- anionischen Emulgatoren einschließlich höherer Fettalkoholsulfate, höherer Alkylsulfonate, Alkylarylsulfonate, Arylsulfonate, den Kondensationsprodukten davon mit Formaldehyd, Salzen von Sulfobernsteinsäureestern und suphatierten Ethylenoxidaddukten; und
- nichtionischen Emulgatoren einschließlich der Reaktionsprodukte von Ethylenoxid, 2-Ethyloxiran oder Methyloxiran mit
- C₁₀-C₂₀-Alkylalkohol(en);
- C₁₀-C₂₀-Alkylsäure(n); oder
- C₁₀-C₂₀-Alkylamid(en);
- oder einer Kombination davon.

7. Verfahren nach Anspruch 6, wobei:
- der/die C₁₀-C₂₀-Alkylalkohol(e) aus 1-Decanol, 1-Dodecanol, 1-Tetradecanol, 1-Hexadecanol, 1-Octadecanol oder 1-Eicosanol ausgewählt ist/sind;
- die C₁₀-C₂₀-Alkylsäure(n) aus Decansäure, Dodecansäure, Tetradecansäure, Hexadecansäure, Octadecansäure oder Eicosansäure ausgewählt ist/sind; und/oder
- das/die C₁₀-C₂₀-Alkylamid(e) aus Decanamid, Dodecanamid, Tetradecanamid, Hexadecanamid, Octadecanamid oder Eicosanamid ausgewählt ist/sind.

8. Verfahren nach einem der Ansprüche 6-7, wobei der Emulgator in Mengen von 0,1 Gew.-% - 10,0 Gew.-% in Bezug auf das Gesamtgewicht der Reaktionsmischung verwendet wird.

9. Verfahren nach einem der Ansprüche 1-8, wobei das Reaktionsgemisch ferner einen Initiator freier Radikale umfasst, der ausgewählt ist aus:
- Persulfatverbindungen einschließlich Ammoniumpersulfat, Kaliumpersulfat und Natriumpersulfat;
- Peroxiden, einschließlich Wasserstoffperoxid, Cumolhydroperoxid, t-Butylhydoperoxid, Acetylperoxid, Lauroylperoxid, Peressigsäure und Perbenzoesäure;
- Azoverbindungen wie 2,2'-Azobisisobutyronitril und 4,4'-Azobis(4-cyanovaleriansäure);
- oder Kombinationen davon.

10. Verfahren nach Anspruch 9, wobei der Initiator freier Radikale in Mengen von 0,01 - 2,00 Gew.-%, bezogen auf das Gesamtgewicht der Reaktionsmischung verwendet wird.

11. Verfahren nach einem der Ansprüche 1-10, wobei die Lagerung in einem Lagertank erfolgt, wobei der Lagertank vor der Einführung des Polymerlatex mit einer Lösung gereinigt wird, die 0,05 - 3 ppm Chlor enthält.

12. Verfahren nach einem der Ansprüche 1-11, wobei der Polymerlatex ultravioletter Strahlung für wenigstens einen Bruchteil der Zeit zwischen der Herstellung des Latex und der Koagulation ausgesetzt wird.

13. Verfahren nach einem der Ansprüche 1-12, wobei eine Menge eines antimikrobiellen Mittels dem in Schritt a) erhaltenen Polymerlatex vor der Lagerung zugesetzt wird.

14. Verfahren nach Anspruch 13, wobei das antimikrobielle Mittel aus 1,2-Benzisothiazolin-3-on, N-Methyl-1,2-Benzisothiazol-3(2H)on, 2-Methyl-4-isothiazolin-3-on oder Kombinationen davon ausgewählt ist, und wobei das antimikrobielle Mittel dem Polymerlatex in einer Menge von 200 - 2000 ppm bezogen auf das Gesamtgewicht des Polymerlatex zugesetzt wird.

15. Verfahren nach einem der Ansprüche 1-14, wobei das Reaktionsgemisch Acrylnitril und Styrol umfasst und/oder wobei das Reaktionsgemisch Polybutadien umfasst.

## Revendications

1. Procédé de production d'un polymère comprenant les étapes de :
a) polymérisation d'une émulsion ou suspension comprenant un mélange réactionnel pour obtenir un latex polymère ; et
b) coagulation du latex polymère en exposant le latex polymère à un ou plusieurs coagulants, et l'isolement du produit coagulé pour obtenir un polymère ;
dans lequel le latex polymère obtenu en a) est stocké avant l'étape de coagulation b) pendant au plus une durée durant laquelle le latex polymère contient ≤ 500 CFU/ml d'organismes producteurs de pigment, comme déterminé conformément à la norme ASTM D 5465-93 (2012) lors de la soumission du latex polymère à l'étape b) de coagulation ; dans lequel le latex est soumis au stockage pendant une durée ≤ 20 h.

2. Procédé selon la revendication 1, dans lequel le mélange réactionnel comprend un ou plusieurs réactifs choisis parmi le styrène, l'acrylonitrile, le butadiène, le polybutadiène, le(méth)acrylate de butyle, le poly(acrylate de butyle), le (méth)acrylate de méthyle, ou leurs combinaisons.

3. Procédé selon l'une quelconque des revendications 1 à 2, dans lequel les organismes producteurs de pigments sont des bactéries choisies parmi les genres Bacillus, Microcossus, Serratia, Flavobacterium ou Pseudomonas.

4. Procédé selon les revendications 1 à 3, dans lequel les organismes producteurs de pigments sont des bactéries choisies parmi les espèces Bacillus Lentus, Bacillus Subtilis Serratia Marcencens ou Pseudomonas Pseudoalcaligenes.

5. Procédé selon l'une quelconque des revendications 1 à 4, dans lequel l'émulsion est une émulsion aqueuse.

6. Procédé selon l'une quelconque des revendications 1 à 5, dans lequel l'émulsion comprend une quantité d'agent émulsifiant choisie parmi :
• des émulsifiants anioniques comprenant les sulfates d'alcools gras supérieurs, les alkyl sulfonates supérieurs, les alkyl aryl sulfonates, les aryl sulfonates, leurs produits de condensation avec le formaldéhyde, les sels d'esters d'acide sulfosuccinique et les produits d'addition d'oxyde d'éthylène suphaté ; et
• des émulsifiants non ioniques comprenant les produits de réaction de l'oxyde d'éthylène, du 2-éthyloxirane ou du méthyloxirane avec
• un ou plusieurs alcools alkyliques en C₁₀-C₂₀ ;
• un ou plusieurs acides alkyliques en C₁₀-C₂₀ ; ou
• un ou plusieurs alkylamides en C₁₀-C₂₀ ;
• ou une combinaison de ceux-ci.

7. Procédé selon la revendication 6 dans lequel :
• l'un ou plusieurs alcools alkyliques en C₁₀-C₂₀ sont choisis parmi le 1-décanol, le 1-dodécanol, le 1-tétradécanol, le 1-hexadécanol, le 1-octadécanol ou le 1-eicosanol ;
• l'un ou plusieurs acides alkyliques en C₁₀-C₂₀ sont choisis parmi l'acide décanoïque, l'acide dodécanoïque, l'acide tétradécanoïque, l'acide hexadécanoïque, l'acide octadécanoïque ou l'acide eicosanoïque ; et / ou
• l'un ou plusieurs alkylamides en C₁₀-C₂₀ sont choisis parmi le décanamide, le dodécanamide, le tétradécanamide, l'hexadécanamide, l'octadécanamide ou l'eicosanamide.

8. Procédé selon l'une quelconque des revendications 6 à 7, dans lequel l'agent émulsifiant est utilisé en des quantités de 0,1% en poids à 10,0% en poids par rapport au poids total du mélange réactionnel.

9. Procédé selon l'une quelconque des revendications 1 à 8, dans lequel le mélange réactionnel comprend en outre un initiateur de radicaux libres choisi parmi :
• des composés de persulfate comprenant le persulfate d'ammonium, le persulfate de potassium et le persulfate de sodium ;
• des peroxydes comprenant le peroxyde d'hydrogène, l'hydroperoxyde de cumène, l'hydoperoxyde de t-butyle, le peroxyde d'acétyle, le peroxyde de lauroyle, l'acide peracétique et l'acide perbenzoïque ;
• des composés azo tels que le 2,2'-azobisisobutyronitrile et le 4,4'-azobis (acide 4-cyanovalérique) ;
• ou des combinaisons de ceux-ci.

10. Procédé selon la revendication 9, dans lequel l'initiateur de radicaux libres est utilisé en des quantités de 0,01 à 2,00% en poids par rapport au poids total du mélange réactionnel.

11. Procédé selon l'une quelconque des revendications 1 à 10, dans lequel le stockage a lieu dans un réservoir de stockage, dans lequel le réservoir de stockage est nettoyé avant l'introduction du latex polymère avec une solution comprenant 0,05 à 3 ppm de chlore.

12. Procédé selon l'une quelconque des revendications 1 à 11, dans lequel le latex polymère est exposé à un rayonnement ultraviolet pendant au moins une fraction du temps entre la production du latex et la coagulation.

13. Procédé selon l'une quelconque des revendications 1 à 12, dans lequel une quantité d'un agent antimicrobien est ajoutée au latex polymère obtenu à l'étape a) avant le stockage.

14. Procédé selon la revendication 13, dans lequel l'agent antimicrobien est choisi parmi 1,2-benzisothiazolin-3-one, N-méthyl-1,2-benzisothiazol-3(2H)one, 2-méthyl-4-isothiazolin-3-one ou des combinaisons de ceux-ci, et dans lequel l'agent antimicrobien est ajouté au latex polymère en une quantité de 200 à 2000 ppm par rapport au poids total du latex polymère.

15. Procédé selon l'une quelconque des revendications 1 à 14, dans lequel le mélange réactionnel comprend de l'acrylonitrile et du styrène, et / ou dans lequel le mélange réactionnel comprend du polybutadiène.
